# EUROPEAN PATENT APPLICATION

(11) **EP 2 159 771 A1**
(43) Date of publication of application: **03.03.2010**
(21) Application number: 09075452.4
(22) Date of filing: 30.01.2008
(51) Int. Cl.: G08B 25/00

(54) **AID-remote portable device**

(30) Priority: 31.01.2007 IT VI20070028
(62) Divisional of application: 08425048.9
(71) Applicant: Beghelli S.p.A., 40050 Monteveglio, Bologna (IT)
(72) Inventor: Beghelli Gian Pietro, 40050 Monterveglio (Bologua) (IT)
(74) Representative: Santi, Filippo

(57) **Abstract**

An aid-remote portable device, similar in appearance to a mobile phone, which incorporates a GSM unit for mobile telephony and a GPS unit for determining the position. The device is provided with a button (16) for the help request to send said help request, at a distance, to a prefixed number or to a service centre, suitable to the reception of alarm, which is able to communicate by hands free communication with the user who has pressed the button (16) and to locate the position thereof according to the received coordinates

## Description

This invention generally relates to an aid-remote portable device.

More specifically, the invention concerns an aid-remote portable device, similar in appearance to a mobile phone and incorporating at least one GSM unit for mobile telephony.

Currently, there are countless mobile phones and technical solutions suitable to increase more and more the functions of such devices.

Indeed, they are known the connections which can be made between mobile phone and computer or palmtop computer, in order to record conversations, access the Internet directly by the mobile phone, so that not to need a fix telephone sets, and perform other optional functions, such as the display of news concerning desired topics on the LCD of the mobile phone.

It is also known the possibility to store desired numbers within an index usable as memory support to make the phone call; in some mobile phones it is also possible to store in a kind of a special phone index a series of favourite numbers which can be associated to prearranged buttons of the keyboard.

In this way, the composition of the desired number is so efficient and rapid since the same can be done simply by typing a key or a short keys combination of the mobile phone and, then, engaging the line by means of the proper button call.

However, this mode of use of the mobile phone places a considerable number of limitations and drawbacks.

Firstly, with the increasing of the available functions, the initial coding of the mobile phone results more and more difficult and complex, in order to match the desired numbers to the selection keys, owing to the particular modes of data insertion and for the not always easy and prompt use.

Then, each key of the mobile phone, usable to activate the call of a pre-stored number, is not identified in a quite accurate way, since the same is in any case designed for a generic use and, thus, it is possible that the user could not find it quickly in case of emergency, since, because of the not frequent use, it is possible to forget the functionality thereof.

In addition, the mobile phone allows to automatically dial the pre-stored number only once, since the automatism consists in a simple selection of the stored numerals; therefore, there is no guarantee of the outcome of an emergency call and, in fact, if the number called was busy, the apparatus would not make any further call attempt.

Again, as said, the functions of a mobile phone allow to automatically select a phone number, but there's no way to automatically locate the position of the caller, with the inevitable consequence that anyone who receives the call, in case of activation by a person unable to speak, for instance for the fact that he is in a situation of serious need of help, is not able to understand the origin and the reason of the call.

Additionally, no mobile phone is conceived as a dissuader equipment towards an eventual aggressor, in danger situations for the caller, nor as phone rescue combiner.

The purpose of this invention is, therefore, to get round the abovementioned drawbacks and, in particular, to realize an aid-remote portable device extremely simple and easy to use, which maintains the basic functionality of a mobile phone and that, at the same time, may also be used as an emergency device, realizing, in an optimal way, both an anti-assault function and an aid-remote and locating function.

Another purpose of the present invention is to produce an aid-remote portable device particularly resistant to impacts and extremely contained in the overall dimensions.

These and other purposes are achieved by an aid-remote portable device according to attached claim 1; other technical features of detail are disclosed in the subsequent claims.

In an advantageous way, the aid-remote portable device according to the invention, by integrating into a single unit the functions of a wireless phone and of aid-remote device, allows to fully perform the functions of a regular mobile phone and, furthermore, is able to locate its position and send alarm and/or help messages, both near the phone and at distance, in case of emergency, in a simple, instantaneous, safe and reliable way, through the simple pressure of a button dedicated to the aid request.

In this way, a mobile phone automatically becomes the communication path between the user and the rescuers during the emergency phase.

Moreover, the aid-remote device, in case of an emergency call, allows to automatically identify the caller and to transmit at a distance, typically to a service centre, the visual documentation of the alarm event.

Finally, the device is extremely simple to use and has a significant autonomy of charge, both on stand-by and in connection.

Further aims and advantages of the present invention will be clear from the description that follows, relative to an illustrative and preferred, but not limiting, example of implementation and from the appended drawings, where:

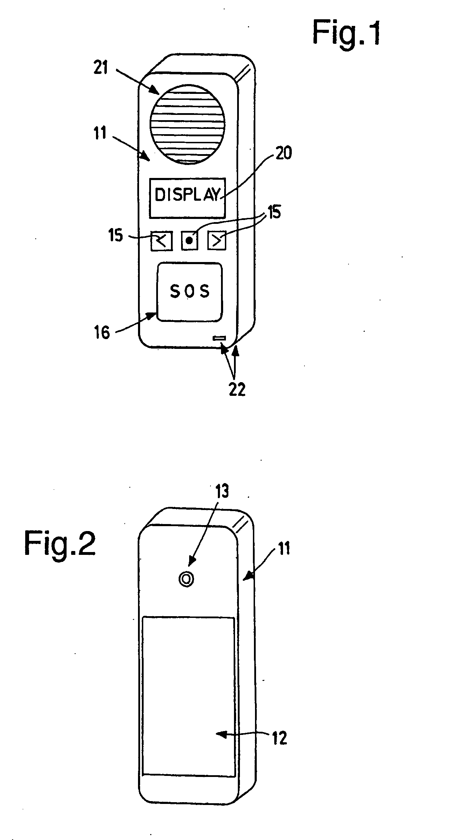

figure 1 is a front view of the aid-remote portable device, according to the present invention;
figure 2 is a view from the back of the aid-remote portable device of figure 1, according to the present invention.

Referring to the mentioned figures, the aid-remote portable device, object of the present invention, includes an outer casing 11, a transreceiving antenna incorporated or such to come out from the casing 11, a display 20, a speaker 21, a microphone 22, a plurality of auxiliary function keys 15, and a 16 button, particularly visible to the user for the size, compared with the function keys 15, and for the particular colour (usually red), which allows to connect automatically the user at a distance with a service centre or with a phone number which is anyhow programmable, by means of the mere pressure of said key 16.

In particular, in illustrative and preferred, but not limiting, feasible forms it takes three auxiliary function keys 15 for the calling to other pre-stored (optional) numbers and for the management functions of the device, one of which is the on/off bottom of the device.

The feed is provided by a lithium battery, rechargeable (typically with an autonomy of 36 hours on stand-by and 2 hours in connection), built-in within the case 11, on the backside of the device, in correspondence of the cover 12; on the backside of the device, the objective of a camera 13 built-in in the aid-remote device is also present.

Practically speaking, as shown in the attached figures, the aid-remote portable device according to the invention is similar in appearance to a mobile phone and incorporates a GSM unit for the mobile telephony and a GPS unit for the determination of the position of the device and thus, of the caller; the status of battery and of GSM and GPS signals are signalled in continuous way on the display 20.

The key 16 allows to submit an aid request, at a distance, to at least a prefixed number or to a specialized centre of alarms receiving, which is able to communicate by hands free communication with the caller who has pressed the button 16 and to locate the position thereof on the basis of the coordinates received from the GPS unit.

The functioning of the aid-remote portable device, according to the present invention, is essentially as follows.

When the device is switched on, on stand-by, periodically examines its position through the unity of the GPS satellite system and keeps memory of the last recorded positions.

If the user presses the button 16, the device instantly sends at a distance, at a service centre or other prefixed number, an alarm message, with the identification of the location of the device, obtained through the GPS unit.

If the device is further programmed for the anti-aggression function, within a predetermined interval of time from the pressure of the button 16 (typically 5 seconds) an alarm siren is immediately activated, built-in in the device, for a deterrent effect towards the aggressor.

As soon as the device is entered into communication with the called number or with the service centre (typically within 5 seconds from pressing the button 16), the hands free communication is activated and the user can speak with the called number or with the operator of the service centre.

In this case, the service centre that receives the call, having located the device and, thus, the user, thanks to the GPS unit built-in into the device, can at best organize the aid.

Optionally, in the aid-remote device according to the invention a camera 13 is also incorporated, which is automatically activated in the alarm phase; in this case, when the button 16 is pressed, at intervals of a few seconds, the camera 13 takes some photographs, which are stored in the device and sent, over a few tens of seconds, to the service centre, so that the service centre can also have a visual documentation of alarm event.

During the normal functioning, on stand-by mode, the user can press one of the auxiliary buttons 15; in this case, depending on how the device has been programmed, that pressure of the at least one of aforesaid buttons 15 can be associated with the call of a phone number defined by the user.

This function can be useful for an elderly or disabled user to rapidly select the default phone numbers.

In addition, one of the auxiliary buttons 15 can also be associated with a non-emergency call to the service centre, in order to establish a conversation with an operator for the information inquiry.

The communication, in this case, may be verbally, directly through telephone, or by hands free communication.

From the description made the characteristics of the aid-remote portable device, which is the subject of the present invention, are clear, as well as are clear the advantages thereof.

In particular, they are represented by:
possibility of use both as a telephone device, through a GSM Dual-Band unit, and as an emergency and location of the caller device, using a GPS unit and a data channel SMS-GPRS suitable to send the location data, in order to better organize the aid, with the further possibility of making a hands free communication with a service centre or with an operational exchange and a dialogue, by hands free communication or by receiver, with other stored numbers;
possibility of use as anti-aggression device with effective deterrent towards the aggressor by the activation of a built-in alarm siren;
distinction of the product, compared to other telephones and mobile phones available on the market;
extreme simplicity and ease of use;
simplification of the setting by the customer;
possibility of activating the device and programming standard functions, through a confidential procedure of connection, in order to avoid that strange people can change the chosen phone numbers stored in correspondence of the function keys;

Finally, it is clear that many other variations can be made to aid-remote portable device in question, without for this reason going out of the novelty principles inherent of the inventive idea, as it is clear that, in the practical implementation of the invention, the materials, the shapes and the sizes of the illustrated details could be any depending on the needs and the same could be replaced with others technically equivalent.

## Claims

1. Aid-remote portable device, of the type comprising at least one outer casing (11), at least one speaker (21), at least one microphone (22) and at least one power source, incorporating at least one GSM unit, which can be used for the mobile telephony, and at least one GPS unit for the determination of the position of said device, and equipped with at least one button (16) for the request of aid suitable to send said request of aid, at a distance, to at least one prefixed and/or programmable number, and/or to a service centre, putting them into hands free communication with the user of the device who has pressed said button (16) and to locate the position thereof on the basis of the coordinates received by said GPS unit.

2. Aid-remote portable device as to claim 1, **characterized by** the fact that said device includes at least one display element (20) and a plurality of auxiliary function keys (15).

3. Aid-remote portable device as to claim 2, **characterized by** the fact that said auxiliary function keys (15) can be used to call other pre-stored numbers with rapid selection and for the management functions of the device, among which the functions of switching on and/or switching off.

4. Aid-remote portable device as to claim 1, **characterized by** the fact that said device incorporates at least one camera (13).

5. Aid-remote portable device as to claim 1, **characterized by** the fact that, when said device is switched on, it periodically analyzes its position by means of said GPS unit and memorizes of the last recorded positions.

6. Aid-remote portable device as to claim 1, **characterized by** the fact that, following the pressure of said button (16) for the request of aid and within a predetermined time interval from said pressure, an alarm siren, built-in in the device, is automatically activated for a deterrent effect towards the aggressor.

7. Aid-remote portable device as to claim 4, **characterised by** the fact that said camera (13) is automatically activated in the alarm phase and on pressing said button (16), enabling to take some photographs, which are stored in the device and possibly sent to the service centre, in order to have at least one visual documentation of the alarm event.

8. Aid-remote portable device as to claim 3 **characterized by** the fact that said auxiliary function keys (15) can be associated with a call to the service centre, in order to establish a conversation with an operator for the request of information, with hands free communication, directly through telephone, or by vocal message.
